# EUROPEAN PATENT APPLICATION

(11) **EP 4 332 630 A1**
(43) Date of publication of application: **06.03.2024**
(21) Application number: 22192939.1
(22) Date of filing: 30.08.2022
(51) Int. Cl.: G01S 17/42, G01S 17/08, G01S 17/36, G01S 17/46, G01S 17/66, G01S 17/86, G01S 7/481, G01C 15/00, G01S 7/51

(54) **MEASURING DEVICE WITH TOF SENSOR**

(71) Applicant: Hexagon Technology Center GmbH, 9435 Heerbrugg (CH)
(72) Inventor: STIGWALL, Johan, CH-9008 St. Gallen (CH); YANG, Zheng, D-88046 Friedrichshafen (DE); JENSEN, Thomas, CH-9400 Rorschach (CH); MAYER, Martin, AT-6820 Frastanz (AT)
(74) Representative: Kaminski Harmann

(57) **Abstract**

A measuring device (1) for acquiring a three-dimensional measuring point related to a target in a scene, the measuring device (1) comprises a distance measuring unit comprising an emitting unit configured for emitting collimated measuring radiation (T) and a receiving unit configured for detecting at least a part of the collimated measuring radiation reflected (R) by the target, a directing unit rotatable around an elevation axis and configured for directing the measuring radiation towards the scene, a capturing unit, wherein the capturing unit comprises an image sensor and is configured to capture at least a scene image of at least part of the scene, and a controlling and processing unit configured at least for aligning the directing unit. The distance measuring unit and the capturing unit are arranged in the directing unit and an optical axis of the capturing unit is coaxially aligned with an optical axis of the distance measuring unit. The image sensor is configured to provide the scene image by generating pixel-related image data. The measuring device (1) comprises a Time-Of-Flight (TOF) sensor, wherein the TOF sensor is configured to provide pixel-related TOF data of at least part of the scene as a TOF image, the pixel-related TOF data comprises at least range data and/or amplitude data for each pixel of the TOF image. The controlling and processing unit comprises a target tracking functionality which is configured to continuously update target information by continuously updating the scene image and continuously deriving a position of the target in the scene image by image processing of the scene image and continuously deriving TOF data for the target by means of the TOF sensor. The target tracking functionality is configured to continuously control directing of the measuring radiation towards the target based on the updated target information.

## Description

### FIELD OF THE INVENTION

The present invention relates to a measuring device for acquiring three-dimensional measuring points, in particular a geodetic measuring instrument. Examples of such instruments are total stations, theodolites, or laser scanners.

### BACKGROUND OF THE INVENTION

Surveying or measuring systems for determining positions in the field of geodesy or the area of construction sites and/or construction are known in manifold forms. Examples of these are systems made up of a stationary surveying device having direction and distance meter, for example, a total station, and an auxiliary instrument marking a point to be surveyed or identified, . A geodetic measuring device of the prior art is described, for example, in the published application EP 1 686 350.

Numerous different embodiments are known with respect to the design of measuring devices. Thus, for example, modern total stations have microprocessors for digital processing and storage of acquired measurement data. The devices generally have a compact and integrated structure, wherein typically coaxial distance measuring elements and computer, control, and storage units are provided in the device. Depending on the configuration level of the total station, a motorization of the targeting and/or aiming unit and also - in the case of the use of retroreflectors (such as a 360° prism) as target objects - means for automatic target search and tracking can be integrated.

As a human-machine interface, the total station can comprise an electronic display-control unit - generally a microprocessor computer unit having electronic data storage means - having display screen and input means, for example, a keyboard. The acquired measurement data are supplied to the display-control unit, so that the position of the target point is ascertainable, visually displayable, and storable by the display-control unit. Total stations known from the prior art can moreover have a radio data interface for establishing a radio connection to external peripheral components, for example, to the measuring aid instrument or to a handheld data acquisition device, which can be designed in particular as a data logger or field computer.

For aiming at and/or targeting the target point to be surveyed, generic geodetic surveying devices comprise a telescopic sight, for example, an optical telescope, as an aiming unit. The telescopic sight is generally rotatable around a vertical standing axis and around a horizontal tilt axis in relation to a base of the measuring device, so that the telescope can be aligned on the point to be surveyed by pivoting and tilting. Modern devices comprise, in addition to the optical visual channel, a camera, which is integrated into the telescopic sight and is aligned, for example, coaxially or in parallel, for acquiring an image, wherein the acquired image can be represented in particular as a live image on the display screen of the display-control unit and/or on a display screen of the peripheral device - for example, of the data logger - used for remote control.

In many measuring applications, measuring of points is performed in that specially designed measuring aid instruments or target objects (for example, surveying rods) are placed at the target point. These usually consist of a pole having a reflector (for example, a 360° prism) for defining the measurement distance or the measurement point. In such surveying tasks, data, instructions, speech, and further items of information are typically transmitted between target object and central measuring device for controlling the measuring procedure and for defining or registering measurement parameters. Examples of such data are identification information for the target object (for example, type of the prism used), inclination of the pole, height of the reflector above ground, reflector constants, or measured values such as temperature or air pressure. These items of information and/or situation-related parameters are required to enable high-precision targeting and surveying of the measurement point defined by the pole having prism.

For measuring a measuring point in a scene, typically, a target or target object (e.g. pole) is located at or near the measuring point and the position of the measuring point is determined by measuring distance and direction to the target by means of the measuring device.

For that, in a first step, the respective target to be measured has to be identified. However, since such target may be located far away from the measuring device, identification may become comparatively challenging. This is even more true in case there are multiple targets in the scene and a particular one of the targets has to be identified and measured.

Typical surveying devices have come to comprise as a standard feature an automatic target aiming and tracking function for prisms used as target reflectors (ATR: "Automatic Target Recognition"). For this purpose, for example, a further separate and a special ATR detector (for example, CCD surface sensor or CMOS) sensitive to the wavelength of the ATR light source are additionally integrated into the telescope.

Known measuring devices provide specific solutions for searching for targets. As for example, a common approach makes use of flashed illumination of the scene with IR (infra-red) light and detection of target-reflected light in the IR spectrum. The reflected IR light may be detected by means of an IR sensitive sensor, wherein the reflected IR light impinges on respective pixels of the sensor. Based on the locations of respectively excited pixels directions to the targets can be derived.

According to an alternative approach, illumination of the targets may be provided by moving a fan of (IR) search light over the scene and detecting respective orientations of the fan at any time a reflection of the search light is detected by a sensor.

When a target is identified, typically a laser beam is aligned with the target and reflected by the target. A distance to the target can be derived by means of detecting the reflected laser light. Numerous principles are known for calculating a distance based on such a reflection of measuring light.

In some applications, the target in the field is not static but is moved over the scene, e.g. the target is moved by an operator for approaching a next measuring point or is carried by a construction vehicle. Here, the measuring laser beam should preferably be kept directed to the target, i.e. the target should be tracked, in order to avoid to perform another search of the target in the scene, which search can become very time consuming.

Today's surveying devices typically comprise a sensor which enables to detect an offset of the received laser beam from a centre of the sensor due to an offset caused on side of the reflector due to reflector movement. The measuring beam can be redirected based on the measured offset to reduce or eliminate the offset. Robustness of such approach is limited due to respective limitation of the sensor size. If the reflector is moved quickly, the signal on the sensor may get lost due to the reflected light does no longer reach the sensor because of a too big offset.

A further limitation is given due to the fact that the signal can get lost by interruption of the line of sight between the reflector and the surveying device. Such interruption can be caused by some obstacles (e.g. tree in front of house, or construction tools, or vehicles) in the field.

Furthermore, while tracking a target the trajectory of the moved target can cross a position of another target which is closer to the surveying device. In such case, no longer the initially tracked target will be tracked but the measuring beam will be kept directed to the newly detected target in the foreground. There may even be no error signal since there is still sufficient reflection signal available due to reflection of the beam by the new target. Hence, the user may believe that the right target is still tracked which is not the case.

Hence, there still can remain uncertainties if the selected target in fact is the target which should be measured. This may also be true for targets which are very close to each other with respect to their aiming directions or in case some of the automatically found targets are not real geodetic targets but may result from unintentional reflections. Such situation might in particular occur in case of tracking where the situation with multiple targets can become quite dynamic, e.g. crossing of targets as mentioned above.

### OBJECT OF THE INVENTION

It is therefore an object of the present invention to provide a measuring device which overcomes above mentioned problems.

A further object of the present invention is to provide a measuring device which provides improved capability for tracking of targets in a measuring scene.

These objects are achieved by the realisation of at least part of the characterising features of the independent claims. Features which further develop the invention in an alternative or advantageous manner can be found in some of the other features of the independent claims and in the dependent claims.

### SUMMARY OF THE INVENTION

The idea of the present invention is mainly directed to measuring devices of the surveying type, like total stations or laser scanners.

Typically surveying devices provide a so called ATR (Automatic Target Recognition) functionality which provides to search and find particular targets in a scene by means of detecting sensor data, and an on-axis camera (OAC) to provide an image of the scene.

Both the OAC and ATR typically use the same optics of the device to image a comparatively small field of view. The two cameras have different specifications. However, one particular idea of the present invention also relates to combine the two functionalities into one sensor for savings in terms of optical complexity, size, cost, and the possibility to adjust the focus position for aiming on targets.

Looking at the resolutions of such combined sensors, the resolution may be at least 1 Mpx or 5 Mpx for capturing a respective image.

Spectrally, the sensor may also provide (N)IR sensitivity, in particular switchable. An IR-cut filter may be attached which transmits e.g. 10% within the respective spectral bandwidth.

Alternatively or additionally, a mechanically switchable filter or a visible wavelength illumination source can be provided.

When alternating between ATR and OAC imaging (active illumination for ATR on/off and different exposure times) it would be possible to provide a clear OAC image without any ATR disturbance while at the same time running the ATR.

The idea of the invention is further directed to arrange a TOF (Time-Of-Flight) sensor in the measuring device and to make use of the data provided by the TOF sensor for tracking a target in the scene. Since such TOF sensor can provide image data but also range or amplitude data for each pixel, such range information can be utilised to provide more reliable and more accurate target identification. Moreover, a target can be tracked in improved manner if TOF range data is considered for tracking the target. This becomes even more relevant in case measuring radiation emitted by the EDM (electronic distance meter) does no longer impinge on the target, e.g. in case of abrupt and unintentional movement of the target.

The TOF sensor can be arranged in addition or instead of any other image sensors and can provide range data as mentioned but also image data.

The TOF sensor can also be configured to provide ATR functionality, e.g. by selectively detecting light of the visual (VIS) spectrum but also of the infrared (IR), in particular near infrared (NIR), spectrum. Since the ATR functionality makes use of illuminating at least a part of the scene with IR or NIR light the sensor is preferably configured for respective detection.

A TOF sensor may provide to detect a reflector by active illumination (typically in NIR) and to obtain range and direction (location) information. The TOF sensor may also be configured to provide an image of the scene with ambient light (typically in NIR). Such information from an TOF sensor or an image from an OAC (typically in VIS) may be used to improve classification of targets by utilizing the scene information or reflector context.

By thus providing a single sensor which can acquire ATR information regarding a direction to a target and also (coarse) range information for the target or a region around (near to) the target a search and identification of potential targets becomes significantly more efficient and accurate while the structural complexity of the device can be reduced.

TOF arrays (sensors) can be categorised into two types: indirect TOF such as Sony IMX567 (640 x 480 pix.) and direct TOF such as OnSemi Pandion. The 4D data (3D point clouds + intensity) of such TOF arrays allow to enhance the functionality of ATR and power search. ATR system exploits the intensity information to aim on a moving prism pole. If there are multiple prism targets located inside the illumination light cone, they might not be only selectable based on intensity. One idea to improve tracking stability is related to replace the camera chip with TOF array, so that separation and selection of multiple targets is improved based on distance data. The TOF Array may also be used for searching of a target.

At least two indirect-TOF Sensors are commercially available. While the first technology CAPD (Current Assisted Photonic Demodulator, e.g. Sony) is widely utilised in TOF cameras, the second technology implemented in Heliotis S4 camera chip (Lock-In 2D detector) is designed for demodulating the envelope of correlogram of white light interferometry. Both technologies differ from each other at their demodulation frequencies and frame rate. While the high demodulation frequency of Sony IMX 556 can be used to achieve mm depth resolution of TOF camera, high frame rate of Heliotis S4 can be advantageous for fast depth scan of white light interferometry.

As for example, a sensor using CAPD technology (Current Assisted Photonic Demodulator) is the IMX556PLR (Sony) with backside-illuminated technology and improved demodulation frequency. Thanks to the backside-illuminated technology, the quantum efficiency for 850nm is as high as 56.6%. In each pixel, two effective pixels are integrated. By applying "Push-Pull" voltage on the electrodes, generated photon electrons can be guided to one or the other pixel. The frequency of this switching mechanism can be synchronized with the illumination frequency. This mechanism is equivalent to sample the intensity at 0° and 180° of a 4-phase-shift algorithm. In order to unambiguously calculate phase and amplitude, intensity at 90° and 270° can be acquired by shifting the switching timing by 90°. The two resulting 0° and 90° micro-frames deliver the four intensity values A1, A2, A3 and A4 from which the phase and amplitude can be calculated.

Concerning the Lock-In 2D detector, each pixel has individual analogue circuit to directly suppress DC part of modulated light and demodulate its amplitude and phase on pixel level. This on-pixel analogue operation can avoid large computational effort in traditional digital processing unit and boost extremely acquisition speed of signal demodulation. This feature enables to offer a white light interferometric system with unusually high depth scanning speed up to 50 mm/sec. Every pixel is a "smart pixel" and has a photon sensitive photodiode which is AC-coupled and equipped with individual analogue circuit with two channels (Q and I). The photon current in both channels is filtered through multiplication and integrator circuit. The output signal Q(t) and I(t) is digitized and forwarded to FPGA unit for digital post-processing. Depending on the use case, further numeric operation can be carried out in FPGA to achieve the target signal. In case of distance measurement via time-of-flight, the light source can be modulated with fixed frequency. The distance between transceiver and target is encoded in the phase of detected photon current at the smart pixel. In case of background suppression on pixel-level, the amplitude modulation of a modulated light source should be detected. In case of target ID detection, the carrier frequency of the multiplication circuit can be swept in order to scan the frequency of modulated light source. If the demodulation frequency is matched to the carrier frequency of light source, then the image will show bright spot, otherwise the image remains dark.

Respectively, the invention relates to a measuring device for acquiring a three-dimensional measuring point related to a target in a scene, wherein a target identifier may be associated with the target. The measuring device comprises a base unit, a support unit mounted on the base unit and rotatable relative to the base unit around an azimuth axis and a distance measuring unit comprising an emitting unit configured for emitting collimated measuring radiation and a receiving unit configured for detecting at least a part of the collimated measuring radiation reflected by the target. The distance measuring unit may be configured to derive a distance to an object (e.g. target) by emitting the measuring radiation to the object und detecting a part of the radiation which is reflected by the object. Several measuring principles for deriving the distance based on such approach are well known in the art, like time-of-flight measurement or WFD (wave form digitising).

The device also comprises a directing unit mounted in the support unit, rotatable relative to the support unit around an elevation axis and configured for directing the measuring radiation towards the scene, in particular toward the target. A first actuator can be arranged for rotating the support unit relative to the base unit around the azimuth axis, a second actuator can be arranged for rotating the directing unit relative to the support unit around the elevation axis, a first angle encoder can be arranged for measuring a rotatory position of the support unit and a second angle encoder can be arranged for measuring a rotatory position of the directing unit.

The device comprises a capturing unit, wherein the capturing unit comprises an image sensor and is configured for capturing at least a scene image of at least part of the scene. The scene image can be generated by the detection of visual-spectrum (VIS) light and/or near-infrared-spectrum (NIR) light. Such scene image may provide an overview image or an image showing a target to be measured for an operator for e.g. precisely aiming a target.

The emitting unit is configured to emit collimated measuring radiation which in particular is provided as a collimated laser beam. Such beam is typically be used to be directed to a retro-reflective target and a reflected portion of the beam is detected by the receiving unit. By that, a distance to the target can be derived in very accurate manner as known in the art.

A controlling and processing unit is comprised by the device, wherein the controlling and processing unit is at least configured for controlling alignment of the directing unit.

According to the invention, the distance measuring unit and the capturing unit are arranged in the directing unit and an optical axis of the capturing unit is coaxially aligned with an optical axis of the distance measuring unit. The image sensor is configured to provide the scene image by generating pixel-related image data by detecting visual-spectrum (VIS) light and/or near-infrared-spectrum (NIR) light.

According to the invention, the measuring device comprises a Time-Of-Flight (TOF) sensor, wherein the TOF sensor is configured for providing pixel-related TOF data of at least part of the scene as a TOF image, the pixel-related TOF data comprises at least range data and/or amplitude data for each pixel of the TOF image.

The controlling and processing unit comprises a target identification functionality which is configured for processing the scene image and the pixel-related TOF data to derive target information based thereon, wherein the target information comprises a direction to the target with respect to the measuring device and TOF data associated to the target.

In context of the present invention, pixel-related data should preferably be understood to be data comprising a plurality of detection values which are distributed over a defined (detection) area (e.g. sensor plane) and which are arranged in a defined scheme, e.g. rows and columns. Hence, pixel-related image data should preferably be understood to comprise particular and different (image) values like colours and/or brightness and/or signal intensities which provide a respective image. Even more specifically, pixel-related image data may provide an image by a defined arrangement of pixels of different pixel values.

According to the invention, the controlling and processing unit comprises a target tracking functionality which is configured to continuously update the target information by continuously updating the scene image, in particular to provide a video stream of the scene, and continuously deriving a position of the target in the scene image by image processing of the scene image and continuously deriving TOF data for the target by means of the TOF sensor. The target tracking functionality is configured to continuously control directing of the measuring radiation towards the target based on the updated target information.

In one embodiment, the TOF sensor can be arranged in the support unit. Such arrangement results in a parallax regarding acquisition of pixel-related data by the TOF sensor and by the image sensor. However, due to known relative arrangement and orientation of these components relative referencing or registering of their inner coordinate systems is available and, by that, the pixel-data can accurately be associated to each other.

In particular, the controlling and processing unit can comprise a pixel relating functionality configured to derive a distance value for each pixel of the TOF image, in particular by processing the TOF data, and relating each pixel of the scene image to at least one pixel of the TOF image based on the distance values for the pixels of the TOF image. Such relating can be performed dynamically, i.e. continuously or on demand, in order to provide accurate relation of the images to each other.

According to one embodiment, the TOF sensor can be arranged in the directing unit and an optical axis of the TOF sensor can be coaxially aligned with an optical axis of the capturing unit, in particular of the image sensor. By that, the TOF image can advantageously be acquired without any parallax relative to the scene image.

In one embodiment, the TOF sensor and the capturing unit can be configured and arranged relative to each other so that a field of view of the TOF sensor is greater than a field of view of the image sensor, in particular wherein a resolution of the image sensor is greater than a resolution of the TOF sensor.

The controlling and processing unit can be configured to provide the pixel-related TOF data associated with the pixel-related image data so that each pixel of the pixel-related image data is assigned to at least one pixel of the pixel-related TOF data, in particular so that the pixels of the pixel-related image data are divided into pixel groups and each group is assigned to one respective pixel of the pixel-related TOF data. In case a resolution of the image sensor is greater than a resolution of the TOF sensor a group-wise relation of the pixels can be applied so that TOF data of one pixel of the TOF sensor is associated to a number of pixels of the scene image.

In particular, the controlling and processing unit can be configured to provide the associated pixel-related TOF data, in particular the TOF image, and pixel-related image data, in particular the scene image, in an overlay manner, in particular displayed on a display unit.. Both images can simultaneously be displayed on a display of the measuring device or on a remote display (e.g. on a smart phone, tablet, laptop or the like).

In one embodiment, the range data comprises a distance value for each pixel or range information for each pixel related to range measurement with a TOF sensor and/or the amplitude data comprises a signal strength related to an intensity of the detected collimated measuring radiation.

According to one embodiment, the measuring device can comprise an illumination unit configured for illuminating at least a part of the scene with illumination radiation, wherein the illumination radiation comprises a modulated illumination signal. The illumination unit can be arranged at the support unit, in particular close to the TOF sensor in order to provide accurate illumination of a region to be captured with the TOF sensor.

In contrast to the emitting unit, the illumination unit provides illumination radiation (light) for illuminating not only a retro-reflector of a target but for illuminating a comparatively larger surveying scene, i.e. a field of illumination is significantly greater than a field which can be illuminated by means of the emitted measuring radiation having a (very) small beam divergence. In other words, the opening angle for the illumination radiation is greater than the opening angle for the measuring radiation.

The TOF data can be derived by processing control data of the illumination device and the TOF sensor, e.g. a signal for emitting the illumination light or a starting pulse and a pixel-related signal for receiving reflected light. The range information can comprise a duration of light propagation starting with emitting the illumination light and ending with receiving the reflected light.

According to one embodiment, the pixel-related image data can be generated or be provided by detecting a non-modulated signal of the visual-spectrum (VIS) light and/or the near-infrared-spectrum (NIR) light by means of the image sensor, in particular a non-modulated illumination signal of the illumination radiation. Hence, a scene image can be derived by detecting a non-modulated portion of the emitted light.

According to one embodiment, the pixel-related TOF data can be generated or be provided by detecting a modulated illumination signal provided by the illumination radiation. Hence, the TOF data can be derived by detecting a modulated portion of the (reflected) emitted light.

According to the present invention, the TOF sensor should be understood as being embodied as an integrated sensor device which comprises a number of sensing pixels (arrays of pixels) which provide detection of the TOF data, in particular detection of a modulated portion of (reflected) illumination light.

In one embodiment, the illumination unit and the capturing unit are configured and arranged relative to each other so that an aperture angle for emitting the illumination radiation is equal or greater than an aperture angle for receiving reflected illumination radiation by the TOF sensor. In particular, in case the illumination unit is not coaxially aligned with the TOF sensor a significantly greater field of view (aperture angle for emitting the illumination radiation) of the illumination unit can provide covering the whole field of view of the OF sensor and by that provide reliable acquisition of TOF data over the entire sensor plane with one shot.

When coaxially aligning the illumination unit and the TOF sensor the entire field of view of the TOF sensor can be illuminated by the illumination unit and TOF data can be gathered for the whole field of view with one shot.

In one embodiment, the controlling and processing unit can comprise a target differentiation functionality configured to differentiate at least two particular targets of a set of targets, wherein the pixel-related TOF data is processed so that TOF data is derived and associated to each of the at least two targets, in particular wherein a position of each of the at least two targets in the scene image is derived and the positions and the TOF data of each of the at least two targets are provided, in particular displayed, in an associated manner. In particular a direction to each of the at least two targets is derived with respect to the measuring device.

In one embodiment, the target differentiation functionality can be configured to receive a target selection criterion, to apply the target selection criterion on the TOF data of each of the at least two targets, to determine a matching measure for each of the at least two targets based on applying the target selection criterion on the TOF data and to select one target of the at least two targets based on the matching measures.

In particular, the target selection criterion comprises at least one of a distance value, an amplitude value, and a signal intensity value.

The above steps of identifying and selecting a particular target may be performed automatically upon definition of a particular criterion, e.g. a distance range within which a target is expected to be located.

By above approach a set of targets can be identified and classified based on target criteria. Furthermore, there can be provided an automated routine to select and track a particular target based on a defined target criterion.

In one embodiment, deriving the target information can comprise processing the pixel-related TOF data by comparing first TOF data of a first group of pixels (at least one single pixel) with second TOF data of a second group of pixels (at least one single pixel) and identifying the target based on a difference between the first and the second TOF data. In particular, the pixels of the first group of pixels are adjacent to the pixels of the second group of pixels.

The target information can be derived in different ways. In particular, targets can be detected based on their related amplitude data, i.e. signal strength of a detected reflection. By that, by comparing a first set of pixels (e.g. having strong amplitude signal of a target) with a second set of pixels (e.g. having weak signal of background) identification can be performed. Hence, a direction to the target can be derived and based on comparing of amplitude data across the image. Range (or distance to the target) can also be based on TOF information, as for example it can be image sensor taps or phase or pulse time of flight measurement e.g. based on waveform.

Performing an approach of above several pixels or sets of pixels can be analysed and compared with other pixels, in particular pixels which are near to each other. By that, e.g. a difference in range data for the pixels can be determined. A possible target may be identified in case one pixel (or the first group of pixels) comprises a particular range or amplitude value which significantly differs from values e.g. of surrounding or neighbouring pixels (surrounding pixels may correspond to diffusely reflecting surfaces that may not comprise range values or are related to a value "0"). Such finding may be a clear hint for an object in the scene which is not part of a natural environment but may be artificial and be placed for particular purpose - like a geodetic target (e.g. reflector or pole).

Since the distance to such target may be known by TOF measurement (typically not as precise as by measurement with the EDM) and such information is provided to the operator of the device the operator can be enabled to individually or manually decide if the found object represents a target to be tracked or not.

Accordingly, in some embodiments, the measuring device can comprise a display and the controlling and processing unit is configured to provide the TOF data on the display. Alternatively or additionally, the TOF data can be transmitted to a remote device for displaying and/or further processing. As for example, the data may be transmitted to a further surveying device for enabling the further device to efficiently aim the found target without having to perform further ATR or other search functionality.

In one embodiment, the controlling and processing unit can comprise a sub-tracking functionality configured to perform, in particular continuously perform the steps of: processing the pixel-related TOF data, identifying a number of targets based on the processing of the pixel-related TOF data, determining respective positions of the identified targets in the TOF image, deriving TOF data for each of the identified targets, providing the TOF image or the scene image together with markers, wherein each marker is associated with a respective identified target and each marker indicates the position of its associated identified target in the provided image, wherein each marker comprises an indicator indicating a measure of the TOF data, in particular a range, for the respective target.

Such sub-tracking function provides information about the targets in the scene within the field of view of the measuring device. Information about these targets, in particular their positions (directions) in the field and their respective distances to the measuring device, can directly be accessible for an operator, e.g. by the positions and sizes of the markers on the display. The markers can preferably be overlaid over the scene image.

In particular, the controlling and processing unit can comprise a switching functionality configured to receive a user input related to selecting one of the markers and controlling the alignment of the directing unit so that the collimated measuring radiation is directed towards the target associated with the selected marker.

In one embodiment the capturing unit and/or the TOF sensor can comprise either a filter that is switchable between VIS and IR, a divided filter, or a plurality of pixels sensitive for the VIS and a plurality of pixels sensitive for the IR spectrum.

The filter may be switchable between the visual spectrum (RGB) or (N)IR spectrum mechanically (filter swap). The TOF sensor may be embodied as a RGB-IR sensor to read out RGB and IR as separate channels of an RGB-IR sensor whose Bayer pattern has four channels (R,G,B,IR). The filter may by an IR-cut filter (extend the visual spectrum to include e.g. 10% IR by attaching an IR-cut filter).

According to an embodiment, the filter can transmit both VIS (e.g. the whole band) and a narrow band IR wavelength. If the IR band is narrow and attenuated, the RGB scene image may still have sufficient colour accuracy.

According to an embodiment, the capturing unit and/or the TOF sensor can comprise a narrowband transmission filter configured to transmit radiation of a wavelength band which comprises the wavelength of the illumination light and to block background radiation of a wavelength excluded from the wavelength band.

In one embodiment, in particular in context of above, the TOF sensor can be configured to provide a coloured scene image, wherein the pixels of the TOF sensor are configured to detect respective colour information.

The controlling and processing unit can in particular comprise an image capturing functionality which is configured for capturing the scene image by controlling the capturing unit. Accordingly, the image capturing functionality can be configured for capturing the TOF image by means of the TOF sensor.

The measuring device comprises a functionality for searching targets in a scene. Such functionality may also be called ATR (Automatic Target Recognition) functionality.

In particular, the target illumination unit can be configured for variably illuminating at least a part of the scene, i.e. to provide illumination of different parts of the scene in different points in time.

The search data can be gathered by the TOF sensor.

In one embodiment, the illumination unit may be configured for emitting illumination light to illuminate at least a part of the scene, wherein illumination light of the NIR or IR spectrum is emitted. In other words, the target illumination unit can comprise a (N)IR light source and provides (N)IR illumination light.

As already mentioned above, the TOF sensor may accordingly be embodied or controlled for selectively receiving and detecting reflections of the illumination light (e.g. by use of a switchable filter). In other words, the controlling of the capturing unit can be provided by illumination-synchronised switching between IR and VIS transmission and/or detection of light. By that, a direction for respective reflections in the scene can be determined. Respective azimuthal and/or elevation angles can be determined.

In one embodiment, the target search functionality can be configured so that the target illumination unit provides flashed illumination of at least a part of the scene and the TOF sensor and/or the capturing unit provides flash-synchronised capturing of search data of at least a part of the scene which is covered by the illumination. Here, variably illuminating is to be understood to provide timely selective illumination. By synchronising light detection of the capturing unit, the search functionality can be performed while simultaneously providing a live image of the scene, in particular if the durations for illumination and detection of illumination light are kept comparatively short.

According to one embodiment the target search functionality can be configured so that the target illumination unit provides an illumination fan which provides illumination of at least a part of the scene about a defined angular range in a first direction (e.g. elevation), wherein an orientation of the illumination fan is varied in a second direction (e.g. azimuthal), in particular continuously varied, and the capturing unit and/or the TOF sensor can provide orientation-synchronised capturing of the search data of at least a part of the scene which is covered by the illumination, wherein a capturing direction for capturing the search data is varied in the second direction in a manner synchronised with varying the orientation of the illumination fan.

In above embodiment variably illuminating is to be understood at least as the illumination covering only a part of the scene and the direction of the illumination is varied. Changing the capturing direction for capturing the search data may be provided by selectively controlling particular pixels of the sensor (e.g. one or more rows/columns of the pixel array) and reading out those pixels. The set of selectively controlled pixels can be varied respectively or may be maintained, e.g. in case of rotating an telescope (directing unit) of the measuring device.

In particular, the capturing unit and/or the TOF sensor comprises a rolling shutter. Alternatively, the TOF sensor comprises a global shutter.

A global shutter may provide advanced optical efficiency and optimised peak power. By that, particular signal-to-background ration by using flashed illumination light with very short pulse duration (e.g. 100 µs) can be provided.

To provide an ATR functionality by the capturing unit a switchable spectral filter can be provided to switch between visible image (normal sensor function) and NIR image (for search). Likely the sensor can be used in a binning mode (e.g. 2x2 binning mode) during search to allow higher frame rates.

According to the invention, not only the target direction can be determined but also the target distance (by TOF data), what is especially helpful in case there are multiple targets in the FOV (field of view) of the image sensor which provides the scene image. While tracking a target the path of the selected target might get close to other unwanted targets. By using the additional distance information of the TOF sensor, the desired target can be selected much easier increasing the robustness in tracking mode.

According to the invention, an optical axis of the distance measuring unit, in particular the emitting unit (e.g. EDM), is coaxially aligned with an optical axis of the capturing unit. The optical axes may be aligned coaxially by use of a semi-transparent mirror, beam splitter or other optical element. An advantage of such arrangement is given by generating an image with the sensor which is parallax-free relative to the aiming direction of the EDM. As a consequence there is no need for complex coordinate transformations providing accordance of a point the measuring radiation is directed to the respective point in the image.

Another advantage of a parallax free arrangement is to provide to see a target (at all) even at short distances. The camera typically has a small field of view (e.g. 1.5 degrees). Hence, in case of an axis-offset the target would not be covered when the EDM aims at when the distance is below a certain value.

In particular, the optical axis of the illumination unit can be coaxially aligned with the optical axis of the TOF sensor.

According to one embodiment the measuring device can comprise a zoom objective, wherein the zoom objective and the capturing unit are arranged so that an optical axis of the zoom objective and an optical axis of the capturing unit are coaxial or parallel and an orientation of the coaxial axes is alignable by means of the directing unit. In particular, the TOF sensor and the zoom objective are arranged so that the optical axis of the TOF sensor extends through the zoom objective and (illumination) light received by the zoom objective is directed to the TOF sensor.

Such arrangement of the measuring device enables to use the OAC (or the TOF sensor) for searching targets. By making use of the focusing capability (zoom objective) target image blur can be reduced or avoided in closer distances during searching and/or tracking. In particular, there would be no need for a second image sensor in the telescope like a particular ATR camera.

Particular advantages of the present invention are cost, size and weight savings when simplifying the telescope design and reducing the number of sensors needed. Furthermore, ATR can be provided by using focusing to measure passive targets and reflective tapes at close distance.

Focusing can be assisted by use of distance information of the EDM signal or by use of the appropriate TOF pixel distance value along target direction. In this way the correct setting of a focusing element in the telescope can be done to achieve a sharp image of the target. Some targets show details resolvable in the closer range i.e. edges of the glass prisms that allow to determine the orientation relative to the measuring device. In this way by applying image processing the six degrees of freedom of the target can be completely determined.

Hence, in one embodiment the controlling and processing unit can comprise a focussing functionality which is configured to derive a focussing distance based on the TOF data or on distance information provided by the distance measuring unit (EDM). The zoom objective can be controlled so that a particular zoom level is provided which zoom level correlates with the focussing distance.

By such type of an ATR with (auto) focussing functionality new applications become available. For instance, a total station with a fussing ATR can operate fully automatic after programming of targets. The ATR can focus, locate and identify the programmed targets. It can reference the inner coordinate system to the global one by automatically aiming and measuring the direction to the targets with high precision, e.g. of arc seconds, in particular independently of the target type.

As mentioned, the autofocussing of the ATR can be performed by help of the measured distance to the target or target mark using the long range EDM of the surveying instrument. Tachymeters or total stations are also equipped with a laser range finder based on the phase meter principle or the pulsed time of flight principle. They measure distances from 0m up to 10km with a precision of millimetres or even better.

The measured distance can be derived in a high-speed continuous mode when rotating the aiming axis of the surveying instrument in horizontal and vertical direction. Every time when the laser beam of the EDM hits an object surface or a reflective target the distance is measured and updated e.g. with a rate of 1kHz or faster. Therefore, the distance to the objects in the scene is (permanently) known. By using this distance information for the focusing optics of the ATR, its image sensor can continuously be updated. The target surface or the target object is sharply imaged and can be recognised and located precisely. Thanks to the high measurement speed of the EDM the focussing can be performed up to the hyperfocal distance of a telescope. Typical depths of fields are from 400m up to infinity when the telescope is focused to large distances. An EDM can measure such distances with high accuracy.

The divergence angle of the laser beam of the EDM can typically be approximately 0.1deg. The field of view of a typical ATR sensor is about the field of view of the visual telescope or imaging RGB camera namely 1.5deg. To accommodate the laser beam of the EDM to the field of view of the ATR the divergence of the EDM laser beam can be increased by a factor 5 to 15. In this case the EDM delivers average distances as a fraction of the image size comparably to a focusing window of a traditional camera. By the increased divergence the target search can be accelerated because a larger section of the environment is captured and sharply imaged. Therefore, recognition of the programmed target becomes more probable, the searching and aiming process can be accelerated and time for aiming and pointing to the target can be shortened.

In one embodiment, the setting of the laser beam divergence can be made fully automated and it can be driven in a self-adjusting mode depending on the actual scene and/or the target types used for the surveying job.

The distance of the EDM also can be used for controlling the emission power and modulation pattern of the ATR target illuminator. At short distances the emitted optical power is low. At longer distances the power is increased mostly up to the eye-safety limit.

Also the duty cycle of the pulsed ATR emission and accordingly the shutter time of the camera sensor can be controlled or at least supported by the EDM distance to the target. The duty cycle of the pulsed emission of the ATR illuminator is typically shortest at short distances, and at longer distances - when the peak power of the ATR-laser is limited by its maximum optical power - then the duty cycle of the ATR emitter is extended to increase the emitted average power.

Concerning the distance-related functions and applications mentioned above, these functions and applications can alternatively or additionally be provided based on distance information provided by the TOF sensor.

The ATR wavelength range can be increased. To improve the signal detection of reflective tapes, a visible wavelength illumination which is not attenuated by a NIR filter can be added.

Measuring devices according to prior art, often comprise an optical viewfinder. In light of the invention, the visual channel can be replaced with an electro-optical viewfinder (EOV) module. Thanks to the high sensor framerates (e.g. provided by a global shutter), a display lag can be very small, thus giving a responsive user experience on a display. To emulate a constant availability of the optical channel, a dedicated live-view button that immediately switches to camera live-view mode and then back again can be provided. Alternatively, the live video can be shown in an always-visible "picture in picture" window besides the rest of the Ul.

By getting rid of the optical viewfinder, typically more light (compared to prior art with viewfinder) is available for the camera. By that, there is a larger amount of visible light available.

Using a sensor of the invention which receives a large amount of visible light, a better sensitivity than with the naked eye can be reached so that manual aiming will be possible in darker environments than today. One could additionally implement a "night mode" which provides good quality still images even in almost total darkness by averaging over many images in a burst and performing advanced de-noising.

### BRIEF DESCRIPTION OF THE DRAWINGS

By way of example only, the inventive aspects are described or explained in more detail below, purely by way of example, with reference to the accompanying figures. Identical elements are labelled with the same reference numerals in the figures. The described embodiments are generally not shown true to scale and they are also not to be interpreted as limiting the invention. Specifically,
Figure 1 shows an exemplary measuring device embodied as a total station;
Figure 2 shows the total station from figure 1 in a schematic view;
Figure 3 shows an embodiment of arranging an image sensor, an emitting unit and a receiving unit of a measuring device according to the invention;
Figure 4 shows a TOF sensor of the total station from figure 1; and
Figure 5 shows overlaid images of an image sensor and of a TOF sensor of a total station from figure 1.

### DETAILED DESCRIPTION OF THE DRAWINGS

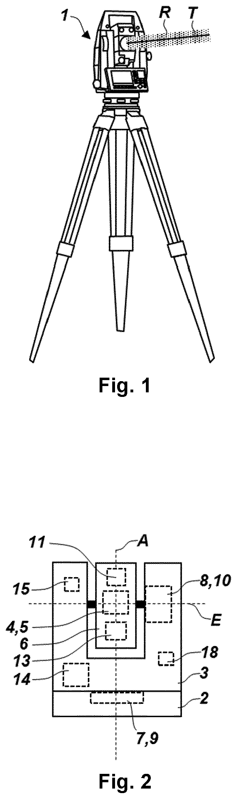

Figure 1 shows a measuring device according to the invention built as a total station 1 for acquiring three-dimensional measuring points. An abstracted illustration of the main components is provided in figure 2. The total station 1 comprises a base unit 2, a support unit 3 mounted on the base unit 2 and rotatable relative to the base unit 2 around an azimuth axis A, a distance measuring unit with an emitting unit 4 configured for providing a transmission beam T (emitted collimated measuring radiation) and a receiving unit 5 configured for detecting a reception beam R (reflected collimated measuring radiation). The reception beam R typically is provided by reflection of the transmission beam T at a target.

A directing unit 6 is mounted at the support unit 3, rotatable relative to the support unit 3 around an elevation axis E and configured for directing the transmission beam T from the emitting unit 4 towards a scene and directing the reception beam R from the scene to the receiving unit 5. The directing in this example of a total station is done by projection optics in a telescope. In other examples, e.g. a laser scanner, the directing unit may be a high-speed rotating mirror, wherein the emitting unit and the receiving unit are arranged in the support unit and the mirror deflects the transmission beam and reception beam to/from the scene.

The emitting unit and the receiving unit may be understood as part of an electronic distance meter (EDM) or also known as range finder using time of flight, multiple frequency phase-shift or interferometry technology. The distance measuring unit may be understood to be the EDM. For example, the emitting unit is a light source, in particular a laser diode, and the receiving unit comprises a sensor configured to detect the reflections of the light that the emitting unit is transmitting.

A first actuator 7 is provided for rotating the support unit 3 relative to the base unit 2 around the azimuth axis A, and a second actuator 8 is provided for rotating the directing unit 6 relative to the support unit 3 around the elevation axis E. A first angle encoder 9 is provided for measuring a rotatory position of the support unit 3 relative to the base unit 2 around the azimuth axis A, and a second angle encoder 10 is provided for measuring a rotatory position of the directing unit 6 relative to the support unit 3 around the elevation axis E.

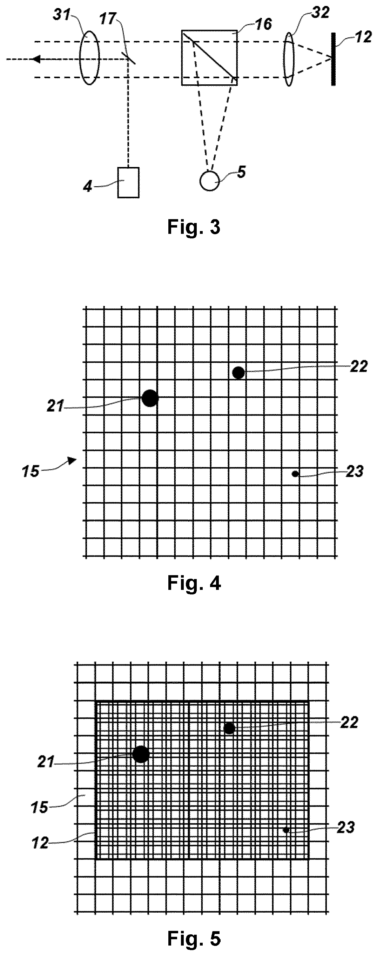

A capturing unit 11, arranged here in the directing unit 6, comprises an image sensor (see figure 3) and is configured for capturing a scene image of at least part of the scene. Here the distance measuring unit (which comprises the emitting unit 4 and the receiving unit 5) is coaxial with the capturing unit 11.

Figure 3 shows the inner arrangement of the image sensor 12 (which is part of the capturing unit 11), the emitting unit 4 and the receiving unit 5 of the measuring device according to figures 1 and 2 in more detail. The optical axis of the image sensor 12, the optical axis of emitting unit 4, and the optical axis of the receiving unit 5 are coaxially aligned to each other. Hence, the optical axis of the capturing unit is coaxially aligned with an optical axis of the distance measuring unit. Here, respective alignment of the optical axes is provided by coupling the optical paths of these optical components by means of an in-coupling mirror 17 and a chromatic beam splitter 16.

The optical arrangement also comprises a main lens 31 and a focussing lens 32.

The capturing unit and its image sensor 12 may thus be arranged so that an optical axis of the image sensor 12 is coaxial with the optical axis of the EDM. The image sensor 12 may be called an On-Axis-Camera (OAC). Such coaxial alignment can for example be provided by coupling the optical axes by means of a beam splitter of semi-transparent mirror.

Such an optical system in a measuring system has the advantage to use the focusing capability of device optics (e.g. a zoom objective), e.g. to avoid target image blur in closer distances during search or tracking. There would be no need of a further image sensor in the telescope like an ATR camera of today's devices.

Accordingly, the OAC can be configured to overtake the ATR functionality. For that, a switchable spectral filter may be provided to switch between visible image (normal OAC function) and (N)IR image (for aiming). The OAC sensor is embodied to sensitively detect light of the VIS and the (N)IR spectrum. In particular, the OAC can be driven in a 2x2 binning mode during aiming to allow higher frame rates.

The measuring device 1 comprises a Time-Of-Flight (TOF) sensor 15, wherein the TOF sensor 15 is configured to provide pixel-related TOF data of at least part of the scene as a TOF image. The pixel-related TOF data provides at least range data and/or amplitude data for the pixels of the TOF image, in particular for each pixel of the TOF image. Here, the TOF sensor 15 is arranged at the support unit 3. According to an alternative embodiment (not shown) the TOF sensor 15 can be arranged at the directing unit 6.

A controlling and processing unit may be a single component of the measuring system, or it may itself comprise several physically distributed units. In the shown example, the controlling and processing unit comprises a field programmable gate array (FPGA) 13 and a central processing unit (CPU) 14. In other embodiments, the controlling and processing unit comprises a network connector and a remote server configured for performing at least some of the data processing according to the invention. The controlling and processing unit is preferably connected to the capturing unit 11, the distance measuring unit and the TOF sensor 15.

As shown in figure 4, the TOF sensor provides a sensor plane having an array of pixels and is capable of providing range data for each pixel of the array. Hence, the TOF sensor is built to provide range data with each pixel. The data provided by the array of pixels may preferably be provided in form of a point cloud. The TOF sensor thus provides multiple distance data for a captured scene.

Additionally or alternatively, the TOF sensor may provide an amplitude signal or amplitude data for each of the pixels. A respective signal amplitude may be a measure for a particular distance. The signal amplitude can depend on the travelling distance of the measuring light. As for example, an illumination unit 18 of the measuring device 1 provides illumination of the scene by means of illumination light which is detected due to its reflection of a target in the scene. A pixel or a group of pixels of the TOF sensor which is/are related to a direction towards the target will detect an increased signal amplitude compared to the surrounding pixels. By comparing signal amplitudes across the sensor plane of the TOF sensor 15 a respective direction to the target can be determined based on a position of a pixel with increased signal amplitude.

Additionally or alternatively, there may be a starting pule and/or a trigger signal be provided for detection or triggering measuring of the travelling time of a respective pulse.

The TOF sensor is configured for providing TOF data of at least part of the scene, wherein the TOF data can comprise range data and/or amplitude data.

The controlling and processing unit 14 comprises a target identification functionality which is configured for processing data provided by the TOF sensor. Based on the TOF data, target information can be derived. The target information may comprise a direction to a target with respect to the measuring device 1 and respective range data associated to the target. It may also or alternatively comprise a signal strength (amplitude data). Together with range information, it can be verified if a target is e.g. a prism corner cube retro-reflector (greater signal strength) or a reflective tape (smaller signal strength).

According to this embodiment, the TOF sensor is also capable for capturing an image of the scene and the image data can be related to the TOF data. By that, respective markers 21-23 may be related to the image, wherein each marker represents a target which may be identified by processing the TOF data.

For identifying a target, the TOF data may comprise a TOF image which comprises the amplitude or range data as pixel-related data and the target information can be derived by processing the pixel-related data by comparing first amplitude (or range) data of a first group of pixels with second amplitude (or range) data of a second group of pixels and identifying the target based on a difference between the first amplitude data and the second amplitude data, the pixels of the first group of pixels may preferably be located adjacent to the pixels of the second group of pixels. By such approach a target may be identified based on significantly differing amplitude or distance values of (neighbouring) pixels.

In other words, a target or a plurality of targets can be detected by analysing the TOF data with respect to increased amplitudes across the TOF image. Regions of the TOF image which comprise low (or even zero) amplitude may be considered to be background pixels (e.g. considered as the first group of pixels) while such regions with higher amplitudes (e.g. considered as the second group of pixels) may be considered to be related to reflecting targets to be found. The light reflected at the target and detected on side of the TOF sensor provides increased amplitude values. By that, directions (and distances) to the targets can be determined. Alternatively, instead of using amplitude data derived range data can be used to determine respective directions (and distances) to the targets.

According to the invention the controlling and processing unit 14 comprises a target tracking functionality which is configured to continuously update the target information. For that, the scene image provided by the image sensor 12 is updated continuously, in particular to provide a video stream of the scene, and a position of the target in the scene image is continuously derived by image processing of the scene image. Furthermore, TOF data for the target is continuously derived by means of the TOF sensor. Thus, for tracking of the target the information provided by both the image sensor and the TOF sensor is processed which in result provides more robust and reliable target tracking.

The target tracking functionality is configured to continuously control directing of the measuring radiation towards the target based on the updated target information.

The scene image is additionally be used for more precise target tracking by e.g. analysing the pixels surrounding the positions of increased TOF amplitudes (target spot in TOF image). Such approach is also shown with figure 5, where the TOF image is overlaid by an additional scene image of an additional image sensor.

The TOF sensor may be configured to detect light of the visual-spectrum (VIS) and light of the IR spectrum.

Figure 4 shows three particular targets 21-23 which are identified by means of processing the range or amplitude data of the TOF sensor. Respective directions to or positions of the targets are depicted by their positions on the TOF sensor. A distance to a respective target is represented by the size of its marker.

According to figure 5, the resolution of the image sensor 12 is greater than a resolution of the TOF sensor 15. Figure 5 shows a referenced overlap of sensor image according to a particular registration of their coordinate systems and their relative arrangements at the measuring device 1.

For additional advantage, both sensors (TOF and image sensor) are run in parallel during target search and also for tracking a target. By gathering information with both sensors not only the target direction is determined but also the target distance can be derived. This can especially be helpful in case there are multiple targets in the scene. As for example, while tracking a target the path of the selected target might get close to other unwanted targets. By using the additional distance information, the desired target gets selected and tracked much easier increasing the robustness in tracking mode.

According to an embodiment, the controlling and processing unit 14 can comprise a target differentiation functionality for differentiating at least two particular targets of a set of targets, where the pixel-related TOF data is processed so that TOF data is derived and associated to each of the at least two targets. The target differentiation functionality is configured for executing the target identification functionality (using the scene image and the pixel-related TOF data) to derive target information based thereon. The pixel-related TOF data is processed so that the target information comprises directions to the at least two particular targets of the set of targets with respect to the measuring device 1 and respective TOF data for the targets. The TOF data is derived and associated to each of the at least two targets.

A position of each of the at least two targets in the scene image can be derived, in particular a direction to each of the at least two targets 21-23 is derived with respect to the measuring device, and the positions and the TOF data of each of the at least two targets 21-23 are provided, in particular displayed, in an associated manner. As for example, the direction to the target may be indicated by a marker in the image and the distance may be displayed next to the marker. By that, a user gets enabled to select one particular target out of a number of targets which should be tracked.

In a further embodiment the controlling and processing unit 14 can be configured to receive a target selection criterion, to apply the target selection criterion on the TOF data of each of the at least two targets, to determine a matching measure for each of the at least two targets based on applying the target selection criterion on the TOF data and to select one target of the at least two targets based on the matching measures.

The target tracking functionality may successively be applied to the selected target, by deriving and updating the target information for the selected target.

A target according to the present invention can be understood as an object the distance and direction to which should be determined. The target may preferably be a surveying target such as a retro reflector, a surveying pole or any other kind of reflective object located at an object to be measured and/or to be tracked.

Although the invention is illustrated above, partly with reference to some preferred embodiments, it must be understood that numerous modifications and combinations of different features of the embodiments can be made. All of these modifications lie within the scope of the appended claims.

## Claims

1. A measuring device (1) for acquiring a three-dimensional measuring point related to a target in a scene, the measuring device (1) comprises
a base unit (2),
a support unit (3) mounted on the base unit and rotatable relative to the base unit (2) around an azimuth axis (A),
a distance measuring unit comprising an emitting unit (4) configured for emitting collimated measuring radiation (T) and a receiving unit (5) configured for detecting at least a part of the collimated measuring radiation reflected (R) by the target,
a directing unit (6) mounted in the support unit (3), rotatable relative to the support unit (3) around an elevation axis (E) and configured for directing the measuring radiation towards the scene,
a capturing unit (11), wherein the capturing unit comprises an image sensor (12) and is configured to capture at least a scene image of at least part of the scene, and
a controlling and processing unit configured at least for aligning the directing unit,
**characterized in that**
the distance measuring unit and the capturing unit (11) are arranged in the directing unit and an optical axis of the capturing unit is coaxially aligned with an optical axis of the distance measuring unit,
the image sensor (12) is configured to provide the scene image by generating pixel-related image data by detecting visual-spectrum (VIS) light and/or near-infrared-spectrum (NIR) light,
the measuring device (1) comprises a Time-Of-Flight (TOF) sensor (15), wherein the TOF sensor (15) is configured to provide pixel-related TOF data of at least part of the scene as a TOF image, the pixel-related TOF data comprises at least range data and/or amplitude data for each pixel of the TOF image,
the controlling and processing unit comprises a target identification functionality which is configured to process the scene image and the pixel-related TOF data to derive target information based thereon, wherein the target information comprises a direction to the target with respect to the measuring device (1) and TOF data associated to the target, and
the controlling and processing unit comprises a target tracking functionality which is configured to continuously update the target information by
continuously updating the scene image, in particular to provide a video stream of the scene, and continuously deriving a position of the target in the scene image by image processing of the scene image and
continuously deriving TOF data for the target by means of the TOF sensor, and
which target tracking functionality is configured to continuously control directing of the measuring radiation towards the target based on the updated target information.

2. The measuring device (1) according to claim 1, wherein the controlling and processing unit comprises a pixel relating functionality configured to derive a distance value for each pixel of the TOF image and relating each pixel of the scene image to at least one pixel of the TOF image based on the distance values for the pixels of the TOF image.

3. The measuring device (1) according to claim 1 or 2, wherein the TOF sensor (15) is arranged in the directing unit and an optical axis of the TOF sensor (15) is coaxially aligned with an optical axis of the capturing unit, in particular of the image sensor.

4. The measuring device (1) according to any of the preceding claims, wherein the TOF sensor (15) and the capturing unit (11) are configured and arranged relative to each other so that a field of view of the TOF sensor is greater than a field of view of the image sensor, in particular wherein a resolution of the image sensor (12) is greater than a resolution of the TOF sensor (15).

5. The measuring device (1) according to any of the preceding claims, wherein the controlling and processing unit is configured to provide the pixel-related TOF data associated with the pixel-related image data so that each pixel of the pixel-related image data is assigned to at least one pixel of the pixel-related TOF data, in particular so that the pixels of the pixel-related image data are divided into pixel groups and each group is assigned to one respective pixel of the pixel-related TOF data.

6. The measuring device (1) according to claim 5, wherein the associated pixel-related TOF data and pixel-related image data are provided in an overlay manner.

7. The measuring device (1) according to any of the preceding claims, wherein the range data comprises a distance value for each pixel or range information for each pixel related to range measurement with the TOF sensor (15) and/or the amplitude data comprises a signal strength related to an intensity of the detected collimated measuring radiation.

8. The measuring device (1) according to any of the preceding claims, wherein the measuring device comprises an illumination unit (18) configured for illuminating at least a part of the scene with illumination radiation, wherein the illumination radiation comprises a modulated illumination signal and the pixel-related TOF data is generateable by detecting the modulated illumination signal provided by the illumination radiation.

9. The measuring device (1) according to any of the preceding claims, wherein the pixel-related image data is generateable by detecting non-modulated signal of the visual-spectrum (VIS) light and/or the near-infrared-spectrum (NIR) light by means of the image sensor, in particular a non-modulated illumination signal of the illumination radiation.

10. The measuring device (1) according to any of the preceding claims, wherein the controlling and processing unit comprises a target differentiation functionality configured for differentiating at least two particular targets of a set of targets, wherein the pixel-related TOF data is processed so that the target information comprises directions to the at least two particular targets of the set of targets with respect to the measuring device (1) and respective TOF data for the at least two targets, the TOF data is derived and associated to each of the at least two targets,
in particular wherein a position of each of the at least two targets in the scene image is derived, in particular a direction to each of the at least two targets is derived with respect to the measuring device (1), and
the positions and the TOF data of each of the at least two targets are provided, in particular displayed, in an associated manner.

11. The measuring device (1) according to claim 10, wherein the target differentiation functionality is configured
to receive a target selection criterion,
to apply the target selection criterion on the TOF data of each of the at least two targets,
to determine a matching measure for each of the at least two targets based on applying the target selection criterion on the TOF data and
to select one target of the at least two targets based on the matching measures.

12. The measuring device (1) according to any of the preceding claims, wherein
deriving the target information comprises processing the pixel-related TOF data by comparing first TOF data of a first group of pixels with second TOF data of a second group of pixels and identifying the target based on a difference between the first and the second TOF data.

13. The measuring device (1) according to any of the preceding claims, wherein the controlling and processing unit comprises a sub-tracking functionality configured to perform the steps of:
processing the pixel-related TOF data,
identifying a number of targets based on the processing of the pixel-related TOF data,
determining respective positions of the identified targets in the TOF image,
deriving TOF data for the identified targets,
providing the TOF image or the scene image together with markers, each marker is associated with a respective identified target and each marker indicates the position of its associated identified target in the provided image, wherein each marker comprises an indicator indicating a measure of the TOF data for the respective target,
in particular wherein the controlling and processing unit comprises a switching functionality configured to
receive a user input related to selecting one of the markers and
control alignment of the directing unit so that the collimated measuring radiation is directed towards the target associated with the selected marker.

14. The measuring device (1) according to any of the preceding claims, wherein the measuring device (1) comprises a zoom objective, wherein the zoom objective and the capturing unit (11) are arranged so that an optical axis of the zoom objective and an optical axis of the capturing unit are coaxial and an orientation of the coaxial axes is alignable by means of the directing unit.

15. The measuring device (1) according to claim 14, wherein the controlling and processing unit comprises a focussing functionality configured to
derive a focussing distance based on the TOF data or on distance information provided by the distance measuring unit and
control the zoom objective so that a particular zoom level is provided which zoom level correlates with the focussing distance.
